# EUROPEAN PATENT SPECIFICATION

(11) **EP 0 548 064 B1**
(45) Date of publication and mention of the grant of the patent: **08.04.1998**
(21) Application number: 93250071.3
(22) Date of filing: 21.02.1989
(51) Int. Cl.: D06F 37/02, D06F 25/00, D06F 95/00, D06F 39/08

(54) **Drum type washing apparatus**
Trommelwaschmaschine
Machine à laver à tambour

(30) Priority: 23.02.1988 JP 40513/88; 28.07.1988 JP 188661/88; 13.09.1988 JP 227418/88; 26.10.1988 JP 139766/88; 15.03.1988 JP 61281/88; 06.12.1988 JP 306942/88; 25.01.1989 JP 15580/89
(43) Date of publication of application: 23.06.1993
(62) Divisional of application: 89730040.6
(73) Proprietor: MITSUBISHI JUKOGYO KABUSHIKI KAISHA, Tokyo (JP); Churyo Engineering Kabushiki Kaisha, Nagoya-shi Aichi-ken (JP)
(72) Inventor: Ueda, Atsushi, c/o Nagoya Machinery Works, Nakamura-ku, Nagoya, Aichi Pref. (JP); Yamada, Shuji, c/o Churyo Engineering K.K., Nakamura-ku, Nagoya-shi, Aichi-ken (JP); Yagami, Kenichi, c/o Nagoya Machinery Works, Nakamura-ku, Nagoya, Aichi Pref. (JP); Tsubaki, Yasuhiro, c/o Nagoya Techn. Institute, Nakamura-ku, Nagoya, Aichi Pref. (JP); Ishihara, Hidetoshi, c/o Nagoya Machinery Works, Nakamura-ku, Nagoya, Aichi Pref. (JP); Kitajima, Kazuo, c/o Nagoya Techn. Institute, Nakamura-ku, Nagoya, Aichi Pref. (JP); Hayashi, Shoichi, c/o Nagoya Machinery Works, Nakamura-ku, Nagoya, Aichi Pref. (JP)
(74) Representative: Meissner, Peter E., Dipl.-Ing.

(56) References cited:
- US-A- 3 358 301
- US-A- 3 444 710

## Description

The present invention relates to a drum type washing apparatus usable on the domestic basis as well as on the industrial basis to process the wash wherein at least one step among steps of washing, dewatering and drying inclusive a step of dry cleaning can be performed in a single unit to process the wash, e.g., various kinds of underwears in individual home or linens, bed sheets or the like in hotel, hospital or the like facilities.

Hitherto, the laundry industry has offered such laundry services as comprising the receiving of soiled cloths such as towels, sheets, bandages, uniforms or the like (hereinafter generally referred to as linens) from hotel, hospital or the lthe ike facilities, processing of them for the purpose of reuse and the delivering of cleaned linens to hotel, hospital or the like facilities. Steps of processing are usually divided into (1) washing, (2) dewatering, (3) drying and (4) finishing. In a case where linens such as towels or the like should be completely dried, steps (1) to (3) are required. On the other hand, in a case where linens such as sheets, bandages, uniforms or the like should be finished by ironing, steps (1) to (4) are required (It should be noted that a step (3) of drying is performed within a short period of time).

With a conventional apparatus, in general, linens are first washed and dewatered and after completion of steps of washing and dewatering the linens are conveyed to a drier in which a step of drying is performed.

The conventional apparatus in which steps of washing and dewatering are continuously performed includes a rotary drum of which wall is made of a perforated plate, and a plurality of beaters are attached to the wall of the rotary drum so that the linens are lifted up from the inner wall surface of the rotary drum as the latter is rotated. With this construction, the linen are usually washed in the presence of detergent under the influence of shock appearing over the water surface when they fall down. On completion of the step of washing, the rotary drum in turn is rotated at a higher rotational speed so that water involved in the linens is dewatered therefrom under the effect of centrifugal force generated by rotation of the rotary drum at such a high rotational speed. On completion of the step of dewatering, a laundryman stops operation of the apparatus and displaces the linens in a wagon or the like to carry them to a drier in which a next step of drying is performed. To dry the linens, a rotary drum type drier is usually employed which includes a rotary drum in which the washed and dewatered linens are dried by blowing hot air into the interior of the rotary drum. A period of time required for performing a step of drying in the rotary drum differs in dependence on the kinds of linens which are typically divided into two kinds, one of them being linens such as towels or the like which require complete drying and the other one being half-dried linens such as sheets, bandages, uniforms and so forth which are conveyed to a next shop where they are finished by ironing. Thus, a drying time is properly selected in dependence on the kinds of linens to be dried.

The above description has been generally referred to the prior art which requires that steps of washing and dewatering and a step of drying are performed using two independent units. As a special case, a so-called washing/dewatering/drying unit is already commercially sold in which steps of washing, dewatering and drying are successively performed using a single unit.

Since this type of unit is so constructed that steps of washing, dewatering and drying are performed without discontinuance, it is unnecessary that a laundryman carries linens in the course of washing operation as is the case with the separate type unit. In fact, however, the unit has the following restrictions from the viewpoint of structure, resulting in the unit failing to be widely put in practical use.
(1) When steps of washing, dewatering and drying are continuously performed in the conventional unit, a period of time required for executing these steps one after another is prolonged substantially longer than a total value of time comprising a time required by the conventional washing/dewatering unit and a time required by the drier, resulting in productibity being reduced. This is attributable to the fact that a perforation rate of the rotary drum is restricted within the range of 20 to 30 % from the viewpoint of mechanical strength of the rotary drum which should be rotated at a higher rotational speed to perform a step of continuous dewatering. Since an ordinal drier has a perforation rate of about 60 %, it is obvious that the conventional washing/dewatering apparatus has a reduced air venting efficiency compared with the drier and this leads to a result that a drying time is prolonged.
(2) After completion of the steps of washing and dewatering, it is often found that some kind of linens, e.g., towels, sheets or the like are brought in tight contact with the inner wall surface of the rotary drum. This makes it difficult to remove the linens away from the inner wall surface of the rotary drum during a period of drying, resulting in uniform drying being achieved only with much difficulties. Sometimes, there arises a necessity for interrupting operation of the unit to manually remove the linens from the inner wall surface of the rotary drum. (3) Generally, an operation for removing the linens from the rotary drum after completion of a step of washing is a severe task which requires a high intensity of force to be given by a young laundryman. Accordingly, a request for facilitating removal operation has been raised from the laundry industry.

A drum type washing apparatus according to the pre-characterizing part of claim 1 is disclosed in US.A. 3 358 301.

Now, description will be made in more details below as to structure of the rotary drum which has been used for the conventional washing/dewatering/drying unit.

A rotary drum type dewatering unit adapted to perform a step of dewatering under the effect of centrifugal force is identical to each of a washer usable in individual home, a laundry washer, a dry cleaner in which an organic solvent is used as a washing medium and a centrifugal type dewatering unit usable on the industrial base as far as a fundamental structure associated with dewatering operation is concerned. Therefore, description will be typically made with reference to a washer usable in individual home.

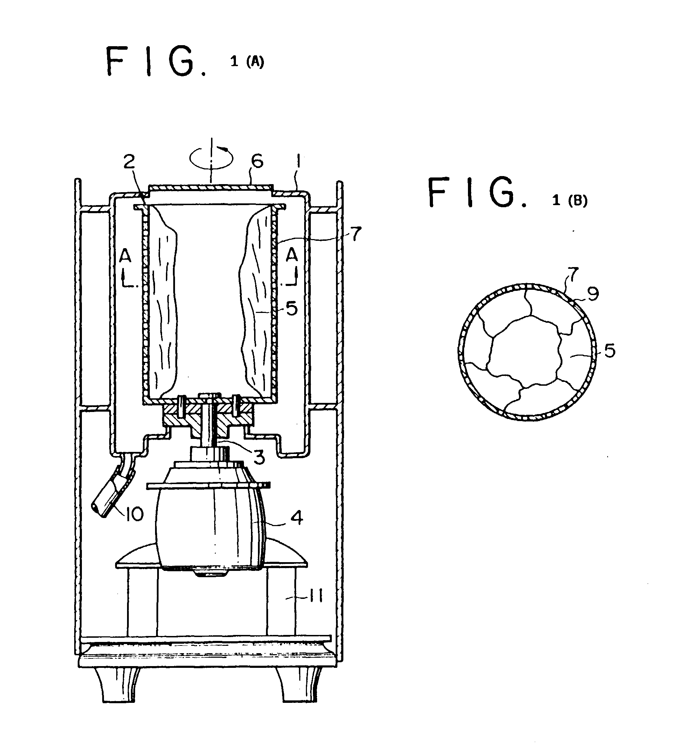

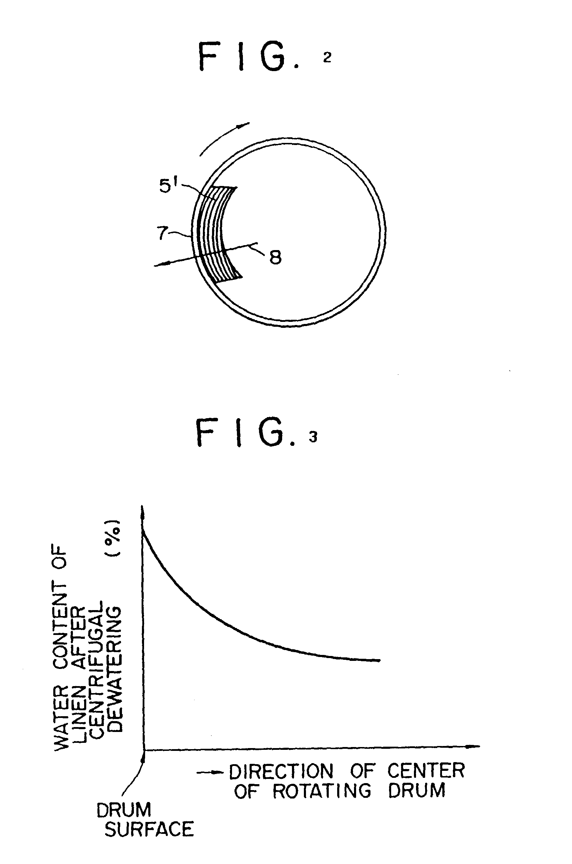

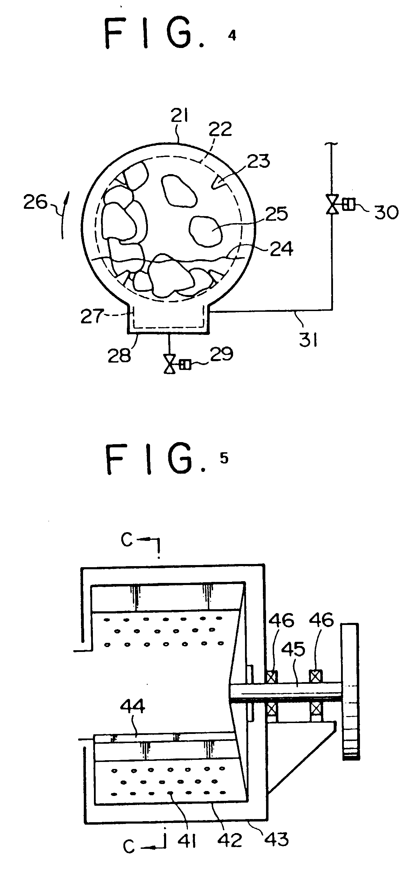

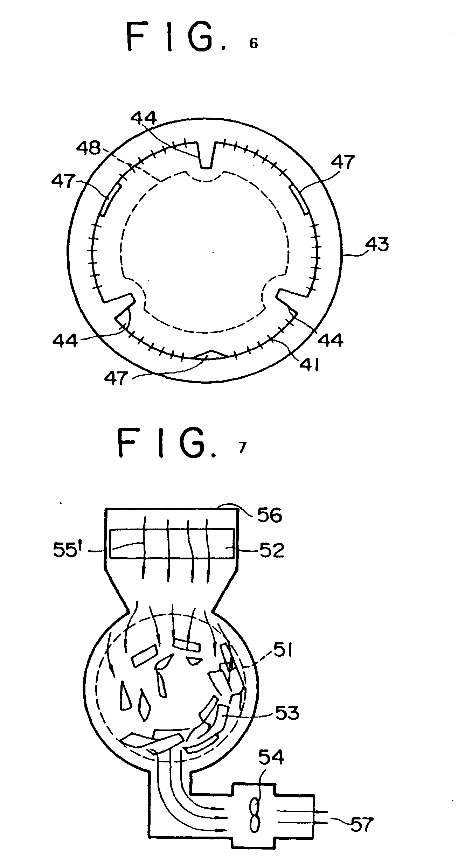

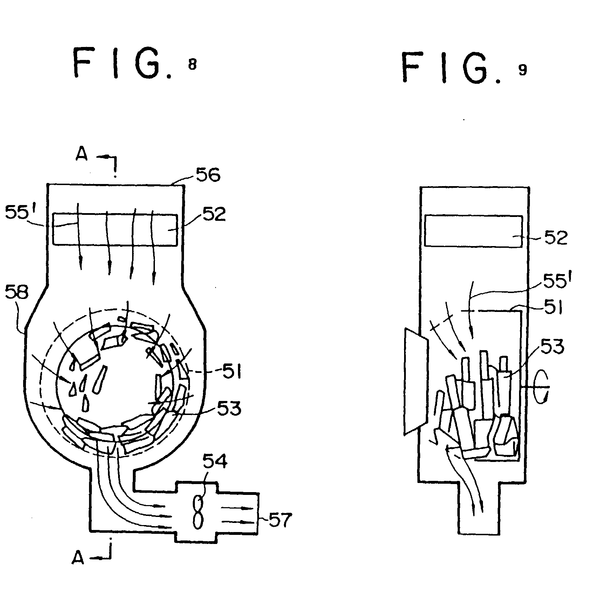

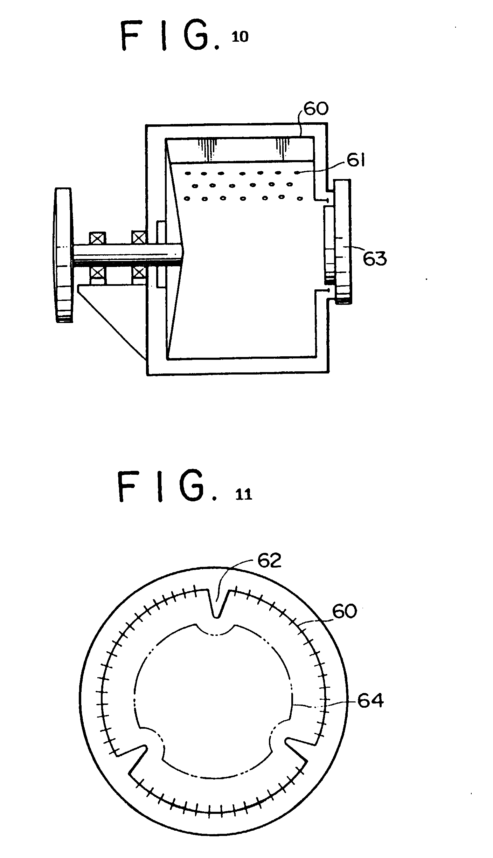

As shown in Figs. 1(A) and 1(B), a dewatering barrel 1 is composed of a rotary drum 2 of which cylindrical wall is made of a perforated plate having a perforation rate in the range of 10 to 20 %, a rotational shaft 3 adapted to support the rotary drum 2 to rotate the latter and a motor 4 for rotating the rotational shaft 3. Reference numeral 9 designates a number of holes which are drilled through the cylindrical wall 7, reference numeral 10 does a water discharge pipe attached to the bottom of the dewatering barrel 1 and reference numeral 11 does a plurality of vibration proof rubbers interposed between the motor 4 and the base platform of the washer.

After completion of a step of washing, linens 5 are introduced into the dewatering barrel 1 from a washing barrel (not shown), the dewatering barrel 1 is closed with a lid 6 and a desired period of time is then set using a timer switch (not shown). Then, the rotary drum 2 is rotated at a higher speed by the motor 2 so that water in the linens 5 is discharged through the cylindrical wall 7 made of a perforated plate of which center axis coincides with that of the rotary drum 2.

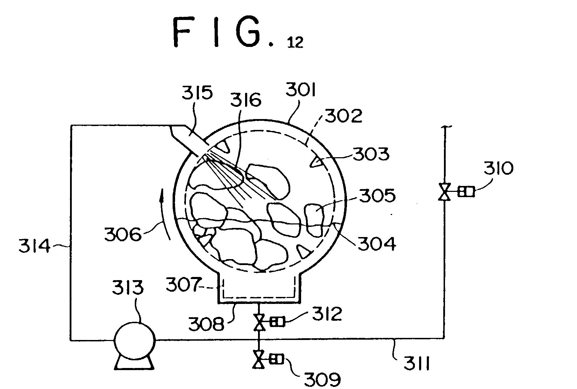

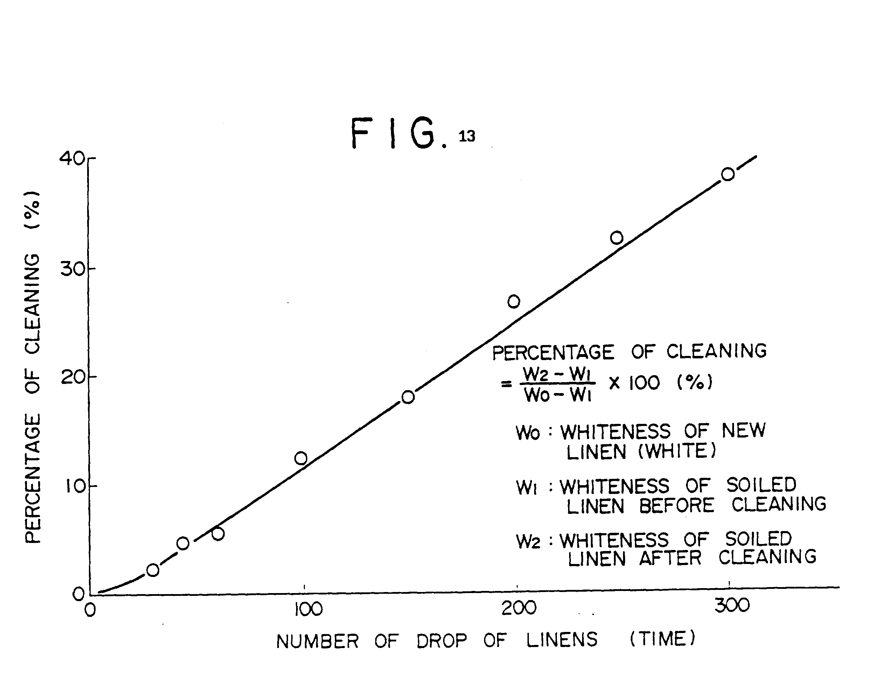

The inventors examined the prior art as mentioned above by measuring a water content of each of the linens 5' at the time when a step of dewatering is substantially completed, the linens 5' being placed round the inner wall surface of the cylindrical wall 7 in a layered structure while having an uniform thickness as viewed in the peripheral direction, as shown in Fig. 2. Results derived from the measurements reveal that the linens 5' located in the proximity of the inner wall surface of the cylindrical wall 7 has a water content about two times as much as that of the linens 5' located remote from the inner wall surface of the cylindrical wall 7, i.e., the linens 5' located near to the axis of rotation of the cylindrical wall 7, as shown in Fig. 3.

This is because of the fact that the cylindrical wall 7 extends at right angles relative to the direction of centrifugal force as is best seen in Fig. 2 so that water remaining between the linens 5 and the inner wall surface of the cylindrical wall 7 is prevented from moving along the inner wall surface of the cylindrical wall 7, resulting in the water retained therebetween failing to be discharged from the linens 5'. On the other hand, since water involved in the linens 5' located remote from the inner wall surface of the cylindrical wall 7 is caused to smoothly move through capillary tubes in the linens 5' in the direction R of centrifugal force, the result is that the linens 5' located in the proximity of the central part of the rotary drum 2 have a water content less than that of the linens 5' located in the proximity of the inner wall surface of the cylindrical wall 7, as shown in Fig. 3.

Additionally, there is a tendency that the linens 5' located in the proximity of the inner wall surface of the cylindrical wall 7 has a water content which is increased more and more as a thickness of the linens 5' is reduced. It is believed that this is attributable to the fact that the linens 5' (located remote from the inner wall surface of the cylindrical wall 7) to serve for thrusting the linens 5' located in the proximity of the inner wall surface of the cylindrical wall 7 in the direction of centrifugal force has a reduced weight, causing an effect of squeezing the water to be reduced.

As will be readily apparent from the above description, since the conventional dewatering unit is so constructed that the cylindrical wall 7 constituting the rotary drum 2 extends at right angles relative to the direction 8 of centrifugal force, it has significant drawbacks that water involved in the linens 5 located near to the inner wall surface of the cylindrical wall 7 can not be satisfactorily discharged from the rotary drum 2 and thereby a property of dewatering which can be expected in nature from an intensity of centrifugal force fails to be exhibited to satisfaction. As a result, an extra quantity of energy and time are naturally consumed for the purpose of drying the linens after completion of a step of dewatering.

Next, a step of washing to be performed with the use of a conventional unit will be described below with reference to Fig. 4 which schematically illustrates a drum type washing unit.

Specifically, Fig. 4 is a schematic sectional view illustrating the drum type washing unit which is maintained during a period of washing.

In the drawing, reference numeral 21 designates a washing barrel, reference numeral 22 does a rotary drum, reference numeral 23 does a plurality of beaters for lifting up linens 25 while the rotary drum 22 is rotated in the direction (as identified by an arrow mark 26) and reference numeral 24 does a washing water which has been introduced into the interior of the washing drum 21 via a water supply piping 31.

Reference numeral 27 designates a lint filter for catching waste threads (lints) derived from the linens 25. The lint filter 27 is accommodated in a filter box 28 having a water discharge valve 29 connected thereto.

With this construction, a water level of the washing water 24 is monitored by a water level meter (designed in a float type, a hydraulic pressure type or the like) which is not shown in the drawing, and when a predetermined quantity of water is introduced into the washing barrel 21, a water supply valve 30 is closed automatically.

The rotary drum 22 is rotated when water supply is started. It continues to be rotated for a period of time set by a timer circuit and associated components (not shown) even after the washing water 24 reaches a predetermined value of water level so that so-called beat washing is performed for the linens 25 by allowing the latter to be lifted up by the beaters 23 and then caused to fall down. After completion of the step of washing, the water discharge valve 29 is opened whereby waste washing water 24 is discharged from the rotary drum 22 to the outside while flowing through the filter 27.

As described above, according to the conventional method of washing the linens 25 using a rotary drum, the linens 25 are washed by repeatedly lifting up them by the beaters 23 and then causing them to fall down by their own dead weight. This allows an upper limit of the number of revolutions of the rotary drum 22 to be defined in the range of 0.7 to 0.8 G which is represented in terms of a gravity acceleration. If the rotary drum 22 is rotated at a higher speed as represented by more than 1 G, the linens 25 are brought in tight contact with the inner wall surface of the rotary drum 22 with the result that the linens 25 can not fall down, causing an effect of washing operation to be reduced remarkably.

It is obvious from the viewpoint of an effect of washing operation that the number of drops of the linens 25 can be increased more and more by increasing the number of revolutions of the rotary drum as far as possible with the result that an effect of agitation can be increased remarkably accompanied by an improved property of washing or a reduced time required for performing a step of washing. However, the number of revolutions of the rotary drum can not be set to a high level in excess of 1 G for the foregoing reasons and this offers a significant obstruction appearing when a washing time is to be shortened.

Next, a conventional step of dewatering will be described below with reference to Figs. 5 and 6 which schematically illustrate structure of a rotary drum.

As shown in Fig. 5, the washing/dewatering unit includes a rotary drum 42 of which cylindrical wall is formed with a number of communication holes 41, and a plurality of beaters 44 (three beaters in the illustrated case) are attached to the inner wall surface of the rotary drum while projecting in the inward direction. In the drawing, reference numeral 45 designates a main shaft for supporting the rotary drum and reference numeral 46 does bearings for rotatably supporting an assembly of the rotary drum 42 and the main shaft 45.

With such washing/dewatering unit, linens to be washed are introduced into the interior of the rotary drum 42 to be washed and after completion of the step of washing, rinsing operations are performed by several times so that the process goes to a step of dewatering to be performed by rotating the rotary drum 42 at a higher rotational speed. It should be noted that during a period of dewatering there may arise a difficult problem that the linens can not be removed from the rotary drum 42 because the latter are brought in tight contact with the inner wall surface of the rotary drum 42 due to penetration of a part of the linens into the communication holes 41 during rotation of the rotary drum at a high rotational speed.

To obviate the foregoing problem, there have been already raised a variety of proposals for preventing the linens from coming in tight contact with the inner wall surface of the rotary drum 42. One of the proposals is such that a plurality of tight contact prevention plates 47 having an adequate configure and dimensions are secured to a part of the inner wall surface of the rotary drum located between the adjacent beaters 44. As is best seen in Fig. 6 , the tight contact prevention plates 47 may be designed either in the form of a flat plate as seen on the side walls or in the form of a hill-shaped member as seen on the bottom side of the rotary drum 42.

According to this proposal, since each of the tight contact prevention plates 47 is secured to a part of the inner wall surface of the rotary drum 42 between the adjacent beaters 44, no penetration of a part of the linens 48 into the communication holes 41 takes place during a period of dewatering because the communication holes 41 located at a part between the adjacent beaters 44 and a part of the inner wall surface of the rotary drum 42 occupied by the tight contact prevention plate 47 are covered with the beaters 41 and the tight contact prevention plate 47. Thus, washing water in the linens 48 is discharged from the rotary drum 42 only through other communication holes 41. This makes it possible to easily remove the linens 48 from the interior of the rotary drum 42 while slowly turning the latter because no penetration of a part of the linens 48 into the communication holes 41 takes place at a part between the adjacent beaters 44 and a part of the inner wall surface of the rotary drum 42 occupied by the tight contact prevention plate 47 as mentioned above, although some part of the linens 48 is penetrated into the communication holes 41 at an area where that latter are not closed with the beaters 44 and the tight contact prevention plates 47.

After completion of the step of washing, the process goes to a next step of dewatering during which washing water involved in the linens 48 is separated therefrom by rotating the rotary drum 42 at such a higher rotational speed that causes a high intensity of centrifugal force (represented, e.g., by 300 G) to be generated. This permits a part of the linens 48 to be penetrated into the communication holes 41 under the effect of the centrifugal force generated in that way whereby the linens are brought in tight contact with inner wall surface of the rotary drum 42.

To prevent the linens from coming in tight contact with the inner wall surface of the rotary drum 42, there was made the above-mentioned proposal that some part of the communication holes 41 are closed with a plurality of tight contact prevention plates 47 so that the linens 48 can be easily removed from the inner wall surface of the rotary drum 42. In spite of the fact that a principal object of the step of dewatering is to discharge washing water through the communication holes 41, however, the above proposal is achieved by closing a part of the communication holes 41 with a dewatering rate being reduced to some extent, in order to prevent the linens 49 from being brought in tight contact with the inner wall surface of the rotary drum. Accordingly, a large quantity of energy is required in correspondence to a degree of reduction of the dewatering rate for performing a subsequent step of drying.

Next, a conventional step of drying will be described below with reference to Figs. 7 to 9.

Figs. 7 to 9 are a schematic view of a conventional drier or washing/dewatering/drying unit, respectively, particularly illustrating the flowing of a hot air in the surrounding area of a rotary drum.

First, description will be made with reference to Fig. 7 as to a step of drying.

In the drawing, reference numeral 51 designates a rotary drum, reference numeral 52 does an air heater comprising a steam jacket or the like, reference numeral 53 does linens and reference numeral 54 does a suction type blower adapted to suck a hot air 55' and then discharge it from the drying system to the outside.

According to the illustrated arrangement, the hot air 55' which has moved through the air heater 52 via an air intake port 56 disposed above the rotary drum 51 is sucked, it is then introduced into the interior of the rotary drum 51 through the holes on the wall of the rotary drum 51 while flowing round the outer wall surface of the latter until it comes in contact with the linens 53 and thereafter it is discharged to the outside via a suction type blower 54 and an exhaust port 57 situated below the rotary drum 51. A characterizing feature of this arrangement consists in that hot air flows in the form of a so-called laminar flow having a number of streaming lines aligned with each other, which is inherent to the suction type air flowing.

Next, description will be made further with reference to Fig. 8 as to the step of drying. The unit shown in Fig. 8 is substantially similar to that in Fig. 7 in structure. As is apparent from Fig. 9 which is a sectional side view of the unit, the latter includes a hot air distributing box 58 located above the rotary drum 51 so that the hot air 55' is positively introduced into the rotary drum 51 from the front part of the upper half of the latter to flow uniformly within the interior of the rotary drum 51. This arrangement exhibits an effect of laminar flow more clearly than in the case as shown in Fig. 7.

As will be readily apparent from the above description, a main feature of the conventional suction type arrangement consists in employment of the suction blower 54 which assures that the hot air 55' is introduced into the rotary drum 51 in the form of a laminar flow and thereby the linens 53 which have been lifted up in the rotary drum 51 as the the latter is rotated are dried in a floated state.

In this manner, the conventional unit employs the suction type arrangement to bring hot air into the rotary drum so that the hot air flows in the form of a so-called laminar flow. Usually, an average flowing speed of the hot air is determined in the range of 1 to 5 m/sec. In an extreme case, it has the maximum flowing speed less than 5 m/sec.

With this construction, to assure that linens are effectively brought in contact with hot air within the interior of the rotary drum, it is necessary that the number of revolutions of the rotary drum is determined in the range of 0.7 to 0.8 G in terms of a gravity acceleration and the linens are floated in the atmosphere including hot air in the form of a laminar flow. If the rotary drum is rotated at a higher rotational speed as represented by more or less 1 G or in excess of 1 G, the result is that the linens are brought in tight contact with the inner wall surface of the rotary drum, causing them to be dried only with much difficulties. In other words, an opportunity for allowing a mass of linens located at the lower part of the rotary drum to be floated in hot air as the rotary drum is rotated is obtainable with the highest possibility when the rotary drum is rotated at a rotation speed which remains in the range of 0.7 to 0.8 G. Thus, if the rotary drum is rotated at a lower speed, the result is that the above opportunity is obtainable with a reduced possibility.

Further, since an average flowing speed of the hot air is maintained at a low level of 1/2 m/sec, a relative speed of the hot air to the linens can not be set to a high level. Strictly speaking, discharging of water vapor produced from the linens is achieved with a delay corresponding to reduction of the relative speed of hot air to the linens.

For the foregoing reasons, an average drying time is usually set in the range of 30 to 40 minutes in accordance with the conventional suction type drying manner. Accordingly, a request for a drier which assures that a drying time can be shortened substantially compared with the conventional drying manner has been raised from the laundry industry.

On the other hand, the conventional drying manner is performed such that linens which have been washed and dewatered are introduced into the rotary drum and the latter is then rotated at a rotational speed under a condition of the centrifugal acceleration as represented by less than 1 G in terms of a gravity acceleration appearing round the inner wall surface of the rotary drum. Thereafter, the linens are lifted up away from the inner wall surface of the rotary drum by activating the beaters attached to the inner wall surface of the rotary drum and they are then caused to fall down by their own dead weight so that they are dried by blowing hot air into the interior of the rotary drum.

To this end, the rotary drum requires a sufficient volume of space in which linens can move freely while they remain within the interior of the rotary drum. Generally, a space about two times as wide as the space set for performing the preceding step of dewatering is required for performing a step of drying. Accordingly, a conventional fully automatic washing/dewatering/drying unit including a single rotary drum in which steps of washing, dewatering and drying are successively performed requires a volume of space two times as large as that of the conventional washing/dewatering unit, causing a manufacturing cost required for manufacturing the unit and dimensions determined for the same to be increased substantially.

Here, for the purpose of reference, description will be made below as to a calculation standard (provided by Japan Industrial Machinery Manufacturer Association) for a standard quantity of load to be carried by a washing/dewatering unit for a laundry shop.$\text{standard quantity of load to be borne Q = f ·} \frac{\text{1}}{\text{4}} {\text{πD}}^{\text{2}} \text{L}$ where f designates a load rate in Kg/m³ wherein f is represented by 45 + 30 D in a case of a washing/dewatering unit and it is represented by 40 in a case of a drier, D does an inner diameter of the rotary drum in meter and L does a inner length of the rotary drum in meter.

The inner length of the rotary drum represents a dimension which is determined such that linens can be introduced into and removed from the rotary drum. Concretely, it is determined in the range of 1.0 to 1.3 m in a case where the rotary drum is charged with a normal quantity of load of 30 Kg. In this case, a drier has a volume of space as represented by a ratio of 1.875 to 2.1 compared with that of the washing/dewatering unit.

If an excessive quantity of load more than the above standard quantity of load is introduced into the rotary drum of the conventional washing/dewatering unit during a step of drying, it has been confirmed that linens are dried with fluctuation in degree of dryness from location to location as viewed round the inner wall surface of the rotary drum due to immovability of the linens within the interior of the rotary drum and moreover the linens require a long drying time in comparison with the quantity of load. Another problem is that if the linens are excessively dried to eliminate the fluctuation in degree of dryness, they tend to have a remarkably reduced period of running life.

Next, description will be made below as to discharging of linens, i.e., removal of the same.

As shown in Figs. 10 and 11, a conventional washing/dewatering unit in which steps of washing and dewatering are successively performed includes a rotary drum 60 of which cylindrical wall is made of a perforated plate 61, and a step of washing is performed in such a manner that linens are repeatedly lifted up by activating a plurality of beaters 62 as the rotary drum is rotated and they are then repeatedly caused to fall down by their own dead weight. When the step of washing is terminated, the rotary drum 60 is rotated at a higher speed so as to allow the linens to be dewatered. On completion of the step of dewatering, an operator stops rotation of the washing/dewatering unit and then opens a door 63 to manually remove from the interior of the rotary drum 60 the linens which have been brought in tight contact with the inner wall surface of the rotary drum under the influence of centrifugal force. Thereafter, he discharges the wet linens from the rotary drum to the outside and then puts them in a wagon or the like means to carry them to a drier.

Thereafter, he opens a door of the drum type drier to introduce the linens into a rotary drum so that they are dried by blowing hot air into the interior of the rotary drum while the latter is rotated.

After he confirms that the linens have been completely dried, he stops operation of the drier, opens the door, manually removes the linens from the interior of the rotary drum and then puts them in a wagon or the like means to carry them to a next step.

As described above, when linens are to be processed in the conventional washing/dewatering unit, they are introduced into the rotary drum and after completion of steps of washing and dewatering, they are manually removed from the interior of the rotary drum. Since the linens are brought in tight contact with the inner wall surface of the rotary drum under the effect of centrifugal force generated by rotation of the linens at a higher speed during a step of dewatering in dependence on the kind of linens, removal of the linens from the interior of the rotary drum after completion of the step of dewatering is a severe task which usually requires a high magnitude of power to be given by a young man.

When the linens are removed from the interior of the rotary drum, it is hardly found that they have been brought in tight contact with the inner wall surface of the rotary drum. However, it is necessary that an operator stoops to extend his hands into the interior of the rotary drum or in some case it is required that he removes the linens therefrom while allowing an upper half of his body to be exposed to the hot atmosphere in the interior of the rotary drum. To eliminate the foregoing inconvenience, a technique for removing linens from the rotary drum after completion of the step of drying was already proposed in Japanese Utility Model Application NO. 19266/1980. This technique is embodied in the form of an apparatus which is so constructed that an inlet port through which wet linens are introduced into the rotary drum is situated on the front door side and an outlet port through which dried linens are removed therefrom is situated on the rear door side. However, with this construction, the whole apparatus tends to be designed in larger dimensions.

As is apparent from the above description, operation for removing linens from the interior of the rotary drum is a hard task which is disliked by anybody. Accordingly, a request for improving such severe task of removing linens from the rotary drum has been raised from the laundry industry.

Now, with the foregoing background in mind, subjects to be solved will be summarized in the following.

To successively perform steps of washing, dewatering and drying, it is necessary that a period of time required for performing the respective steps is substantially shortened and linens can be easily removed away from the inner wall surface of a rotary drum after completion of the step of drying. Particularly, to shorten a period of time required for performing steps of washing, dewatering and drying, the following items should be improved.

### (1) Reduction of a time required for the step of washing:

It is advantageous from the viewpoint of an effect of washing that the number of revolution of rotary drum is increased as far as possible to increase the number of drops of linens so that an effect of agitation is increased substantially accompanied by an improved property of washing or a reduced washing time. However, since the number of revolutions of a rotary drum can not be set to a level in excess of 0.8 G for the aforementioned reasons, this offers a significant obstruction when a washing time is to be shortened.

### (2) Reduction of a time required for the step of dewatering:

A conventional dewatering unit is usually constructed that the inner wall surface of a rotary drum extends at right angles relative to the direction of centrifugal force (while a so-called corrugation angle exhibits 180°). This construction leads to a significant drawback that water involved in linens located in the proximity of the inner wall surface of the rotary drum is not satisfactorily removed therefrom and moreover a property of dewatering to be naturally derived from an intensity of centrifugal force is not exhibited to the satisfaction of an operator. Consequently, an extra amount of energy and time are consumed for the purpose of drying linens after completion of the step of dewatering.

### (3) Reduction of a time required for the step of drying:

Hot air is heretofore introduced into a rotary drum in accordance with the air suction manner. The hot air moves in the rotary drum in the form of a so-called laminar flow of which average flowing speed is determined in the range of 1 to 2 m/sec. Even when it is to flow at the highest speed, the flowing speed is set to a level less than 5 m/sec.

To assure that linens comes in contact with hot air at a high efficiency within the interior of the rotary drum, it is necessary that the number of revolutions of the rotary drum is determined in the range of 0.7 to 0.8 G in terms of a gravity acceleration and the linens are floated in the laminar flow of hot air as long as possible. If the number of revolutions of the rotary drum is set to a level of more or less 1 G or in excess of 1 G, the result is that the linens are brought in tight contact with the inner wall surface of the rotary drum and thereby drying is achieved only with much difficulties. In other words, an opportunity for allowing a mass of linens located at the lower part of the rotary drum to be floated in the hot air as the rotary drum is rotated is maximized when the umber of revolutions of the rotary drum is determined in the range of 0.7 to 0.8 G represented by a gravity acceleration. If the rotary drum is rotated at a rotational speed lower than the foregoing range, the result is that the above opportunity is adversely reduced.

Further, since an average speed of hot air remains at a a low level of 1/2 m/sec, a relative speed of the linens to the hot air can not be set to a high level. Strictly speaking, removing of water vapor evaporated from the linen layer is achieved with a delay corresponding to the reduced relative speed.

For the aforementioned reasons, an average drying time is set in the range of 30 to 40 minutes in accordance with the conventional suction manner. Accordingly, a request for developing a drier adapted to remarkably shorten the average drying time has been raised from the laundry industry.

### (4) Easy removal of linens from a rotary drum

As mentioned above, operation for removing linens from a rotary drum is a severe task which is disliked by anyone. Accordingly, a request for improving the removing operation has been also raised from the laundry industry.

### OBJECTS AND SUMMARY OF THE INVENTION

The present invention has been made with the foregoing problems in mind and its principal object resides in providing a drum type washing apparatus which is entirely free from these problems.

Other object of the present invention is to provide a drum type washing apparatus which assures that a property of dewatering inherent to the apparatus of the present invention is satisfactorily exhibited and at the same time a quantity of energy and time consumed during a step of dewatering can be reduced substantially.

Another object of the present invention is to provide a drum type washing apparatus which assures that the aforementioned restriction relative to the number of revolutions of the rotary drum can be eliminated.

Further another object of the present invention is to provide a drum type washing apparatus which assures that linens which have been brought in tight contact with the inner wall surface of the rotary drum can be mechanically removed therefrom at a high efficiency without an occurrence of closure of communication holes as well as without reduction of a dewatering rate.

Further another object of the present invention is to provide a drum type washing apparatus which assures that two significant problems are satisfactorily solved, one of them being such that a conventional apparatus has a restriction relative to the range within which the number of revolutions of the rotary drum is determined so as to allow linens to be floated in a laminar flow of hot air and the other one being such that an average speed of flowing of the linens in the atmosphere of hot air is set to a low level of 1 to 2 m/sec and thereby a relative speed of the hot air to the linens can not be determined at a high level.

Further another object of the present invention is to provide a drum type washing apparatus which offers advantageous effects that linens in a rotary drum can be uniformly dries even when the rotary drum is charged with an excessive amount of load more than a standard quantity of load and a period of time required for performing a step of drying can be shortened substantially.

The present invention provides a drum type washing apparatus includes a rotary drum made of a perforated plate to perform at least one step among steps of washing, dewatering and drying the wash in the rotary drum, wherein the apparatus is provided with a single liquid injection nozzle or a plurality of liquid injecting nozzles adapted to inject liquid toward the interior of the rotary drum from positions located outside the peripheral wall of the rotary drum.

According to the characterizing feature (3) of the present invention, washing water is introduced into the interior of the rotary drum in the form of a jet stream via the perforated plate and a step washing is performed in such a manner that linens lifted up away from the inner wall surface of the rotary drum as the latter is rotated are caused to fall down impulsively. Concretely, the apparatus is characterized in that the nozzle serves to inject washing water toward the rotary drum at an angle in the angular range of 9 o'clock to 3 o'clock represented by the short pointer of a clock.

According to the characterizing feature (3) of the present invention, the rotary drum is rotated at a rotational speed in the presence of a gravity acceleration represented by more or less 1 G (the gravity acceleration may be in excess of 1 G) and the linens are caused to fall down impulsively under the effect of jet stream of liquid injected through the nozzle, even though they are brought in tight contact with the inner wall surface of the rotary drum to some extent.

Additionally, there is no need of defining the number of revolutions of the rotary drum within the range where the rotary drum is rotated at a rotational speed represented by 0.7 to 0.8 G as is the case with the conventional apparatus. Thus, the rotary drum may be rotated at a rotational speed represented by, e.g., 0.8 to 1.2 G so that the number of drops of the linens per unit time is increased. This assures that an effect of agitation of the linens is increased and the number of drops of them is also increased whereby a performance of washing is improved and a washing time is shortened.

According to the characterizing feature (3) of the present invention, linens receive an agitating effect and an impulsively increased washing effect which are represented by $\sqrt{\text{1.2/0.7}}$ times, i.e., about 1.3 times compared with the conventional apparatus, when it is assumed that a conventional rotary drum is rotated at a rotational speed as represented by 0.7 G and a rotary drum of the present invention is rotated at a rotational speed as represented by 1.3 G. In addition, it has been experientially found that the linens receive a washing rate about two times as high as that of the conventional apparatus owing to an effect derived from impulsive drops of the linens under the influence of jet stream of liquid injected through the nozzle.

Consequently, this makes it possible to shorten a washing time to a level of half or to perform an intense washing operation at a high efficiency compared with the conventional apparatus.

### BRIEF DESCRIPTION OF THE DRAWINGS

The present invention will be illustrated in the following drawings in which:
Fig. 1 (A) is a sectional side view of a conventional drum type drier.
Fig. 1(B) is a cross-sectional view of the drier in Fig. 1(A).
Fig. 2 is a schematic cross-sectional view of the drier similar to Fig. 1(B), particularly illustrating how the linen layer comes in contact with the inner wall surface of the rotary drum during a period of testing with respect to a period of dewatering.
Fig. 3 is a graph illustrating distribution of a water content during the period of testing as shown in Fig. 2
Fig. 4 is a cross-sectional view schematically illustrating conventional drum type washing apparatus.
Fig. 5 is a sectional side view illustrating another conventional drum type washing apparatus.
Fig. 6 is a cross-sectional view of the apparatus taken in line C - C in Fig. 5.
Figs. 7 and 8 are a sectional side view schematically illustrating essential components constituting another drum type washing apparatus, respectively.
Fig. 9 is a sectional side view of the apparatus taken in A - A in Fig. 8.
Fig. 10 is a sectional side view of another conventional drum type washing apparatus, and
Fig. 11 is a front view of the apparatus in Fig. 40.
Figs. 12 and 13 illustrate a drum type washing apparatus in accordance with a third embodiment of the present invention, respectively.
Fig. 12 is a sectional view illustrating essential components constituting the apparatus.
Fig. 13 is a graph illustrating a relationship between the number of drops of linens and a degree of cleaning in %.

### DETAILED DESCRIPTION OF THE PREFERRED EMBODIMENTS

Now, the present invention will be described in a greater detail hereinafter with reference to the accompanying drawings which illustrate preferred embodiment thereof.

Fig. 12 is a schematic sectional view illustrating essential components constituting a drum type washing apparatus in accordance with a third embodiment of the present invention. Referring to the drawing, the apparatus includes as essential components an outer drum 301, an inner rotary ddrum 302 having a plurality of beaters 303 each comprising a perforated plate for lifting up linens attached to the inner wall surface thereof, a water pump 313 for supplying the washing water 304 or recirculate the latter and a nozzle 315 for injecting the washing water 304 delivered from the pump 313 to be introduced into the interior of the rotary drum 302 in the form of a jet flow via the perforated plate.

The rotary drum 302 is rotated at a required rotational speed by a motor (not shown) in cooperation with a control unit (not shown).

A water supply piping 311 extends to the suction side of the pump 313 with a water supply valve 310 disclosed midway of the piping 311. In addition, a valve 312 serving for both water supplying and water recirculating and a water discharging valve 309 are connected to the piping 311 so that washing water is discharged from the bottom of a filter box 308 in which a filter 307 is accommodated. A recirculating piping 314 is connected to the delivery side of the pump 313 with the nozzle 315 provided at the foremost end thereof.

As is apparent from the drawing, the nozzle 315 is arranged in the proximity of the outer wall surface of the rotary drum 302 in such a manner that it is oriented toward the rotary drum 302 within the angular range of 9 o'clock to 3 o'clock represented by the short pointer of a clock.

A step of washing is practiced in the following manner with the apparatus as constructed in the above-described manner.
(1) Linens 305 to be washed are introduced into the interior of the rotary drum 302 through the opening of a door (not shown) and the rotary drum 302 is then rotated by the motor in cooperation with the control unit in the direction as identified by an arrow mark 306 under a condition of acceleration represented by 0.8 to 1.2 G.
(2) A specified quantity of washing water 304 is supplied to the drum 301 via the water supply valve 310, the water supply piping 311, the pump 318, the recirculating piping 314 and the nozzle 315 or via the water supply valve 310, the water supply piping 311 and the valve 312. At this moment, a quantity of water supplied in that way is controlled by a water level sensor of the float type or the hydraulic pressure type (not shown).
(3) When the drum 301 is filled with a specified quantity of washing water 304, the latter is recirculated via a recirculating system comprising the drum 301, the valve 312, the pump 313, the recirculating piping 14 and the nozzle 314 so that it is injected through the nozzle 314 toward the linens 305 via the perforated plate of the rotary drum 302 to collide with the linens 305 which are lifted up from the inner wall surface or the rotary drum 302 by actuating the beaters 303 as the rotary drum 302 is rotated. Consequently, the linens 305 are impulsively displaced one after another inwardly of the inner wall surface of the rotary drum 302.
(4) After the preceding step as mentioned in the paragraph (3) is executed for a period of time which has been previously determined in accordance with a sequence program or a computor program (not shown), operation of the pump 313 is stopped so that the waste washing water 304 is discharged from the apparatus via the filter 307, the valve 312 and the valve 309.

The present invention has been described above with respect to the drum type washing apparatus in which water is used as washing medium. However, it should be noted that it should not be limited only to this. Alternatively, the present invention may be applied to a so-called dry cleaning machine in which perchloroethylene, trichlorotrifluoroethane (Flon 113), 1.1.1. trichloroethane or petroleum based solvent is used as washing medium with the same advantageous effects as mentioned above being assured.

Fig. 13 is a diagram illustrating a relationship between the number of drops of the linen layer having water involved therein from an elevated position having a height of 1.2 m and the cleaning rate in % represented with respect to standard soiled linens (representative of soiled linens specified by Japan Petrochemical Association).

As will be readily apparent from the drawing, the cleaning rate is increased in proportion to increase of the number of drops of the linens. Consequently, the cleaning rate can be increased in proportion to the number of drops of the linens to be performed per unit time.

## Claims

1. A drum type washing apparatus including a housing, a rotary drum () made of a perforated plate to perform at least one step among steps of washing, dewatering and drying the wash in said rotary drum, said apparatus is provided with a plurality of beaters (303) disposed inside the rotary drum on the peripheral wall,
characterized in
that said apparatus is provided with a single liquid injection nozzle (315) or a plurality of liquid injection nozzles (315) slantwise upwardly or just upwardly of said rotary drum (303) close thereto, a pump (313) for compressively delivering washing water is connected to said nozzle or nozzles whereby washing water can be injected into said rotary drum through the perforated plate thereof.

## Patentansprüche

1. Trommelwaschmaschine, die ein Gehäuse und eine Drehtrommel () aus gelochtem Blech besitzt, bei der mindestens ein Schritt unter den Schritten Waschen, Schleudern und Trocknen der Wäsche in der Drehtrommel ausgeführt wird, wobei die Maschine mit mehreren Mitnehmerrippen (303) versehen ist, die a der Innenwand der Drehtrommel über den gesarnten Umfang verteilt angeordnet sind,
dadurch gekennzeichnet,
daß die Maschine mit einer einzigen Flüssigkeitszulaufdüse (315) oder mehreren Flüssigkeitszulaufdüsen (315) ausgestattet ist, die dicht an der Drehtrommel (303) schräg nach oben oder direkt nach oben gerichtet angeordnet ist bzw. sind, und mit dieser Düse oder diesen Düsen eine Pumpe (313) für die Zuführung von Waschwasser unter Druck verbunden ist, wodurch Waschwasser durch das gelochte Blech der Drehtrommel hindurch in diese gelangen kann.

## Revendications

1. Machine à laver à tambour, comportant un carter, un tambour rotatif réalisé en une plaque perforée pour effectuer au moins une étape parmi les étapes de lavage, essorage, et séchage du linge dans ledit tambour rotatif, ladite machine étant munie d'une pluralité de batteurs (303) disposés à l'intérieur du tambour rotatif sur la paroi périphérique,
caractérisée en ce que ladite machine est munie d'une buse d'injection de liquide unique (315) ou d'une pluralité de buses d'injection de liquide (315) obliquement vers le haut ou juste vers le haut dudit tambour rotatif (303) à proximité de celui-ci, une pompe (313) pour délivrer, sous pression, de l'eau de lavage étant reliée à ladite buse ou auxdites buses, grâce à quoi de l'eau de lavage peut être injectée dans ledit tambour rotatif à travers la plaqué perforée de celui-ci.
